(19) Europäisches Patentamt
European Patent Office
Office européen des brevets

(11) **EP 2 096 011 B1**

(12) **FASCICULE DE BREVET EUROPEEN**

(45) Date de publication et mention
de la délivrance du brevet:
**11.01.2017 Bulletin 2017/02**

(51) Int Cl.:
***B60T 13/74*** *(2006.01)*     ***B60T 8/17*** *(2006.01)*

(21) Numéro de dépôt: **09290089.3**

(22) Date de dépôt: **09.02.2009**

(54) **Procédé de commande d'un frein de véhicule avec compensation des dilatations**

Verfahren zur Steuerung einer Kraftfahrzeugbremse mit Dehnungskompensation

Method for controlling a vehicle brake with dilatation compensation

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **27.02.2008 FR 0801070**

(43) Date de publication de la demande:
**02.09.2009 Bulletin 2009/36**

(73) Titulaire: **Safran Landing Systems
78140 Vélizy-Villacoublay (FR)**

(72) Inventeur: **Thibault, Julien
91190 GIF SUR YVETTE (FR)**

(74) Mandataire: **Parzy, Benjamin Alain et al
Cabinet Boettcher
16, rue Médéric
75017 Paris (FR)**

(56) Documents cités:
**EP-A- 1 186 495      EP-A- 1 695 887
EP-A- 1 759 989      US-A1- 2001 030 462
US-B1- 6 662 906**

**Description**

L'invention concerne un procédé de commande d'un frein de véhicule avec compensation des dilatations.

ARRIERE-PLAN DE L'INVENTION

Les systèmes de freinage pour roues de véhicule comportent des actionneurs de freinage (hydrauliques ou électromécaniques) pour appliquer sur des éléments de friction un effort en vue de générer un couple de freinage tendant à ralentir le véhicule.

La plupart des commandes de frein connues en aéronautique utilisent une consigne, qui est traduite soit en une pression dans le cas des freins hydrauliques, soit en un effort à appliquer ou un déplacement du poussoir dans le cas de freins à actionneurs électromécaniques.

Les documents EP1695887 et US 6662906 illustrent des dispositifs et des procédés de commande de frein utilisant des consignes de commande basées sur un déplacement du poussoir.

Dans ce dernier cas, la commande des actionneurs en position pose un problème particulier lié à l'éventuelle dilatation des composants du frein lors d'un freinage. En effet, lors d'un freinage de haute intensité, par exemple un freinage d'un aéronef à pleine charge faisant suite à un décollage refusé, la chaleur dégagée par les éléments de friction du frein est très importante et risque de conduire à une dilatation du tube de torsion sur lequel les éléments de friction sont montés, ce qui pourrait, pour une position du poussoir de l'actionneur donné, conduire à une diminution de l'effort exercé.

En particulier, dans le cas d'un frein à éléments de friction en carbone, la dilatation des éléments de friction est très faible par rapport à la dilatation du tube de torsion métallique sur lequel les éléments de friction sont disposés, ce qui peut conduire, en cas de dégagement de chaleur très important, à une baisse de l'effort de freinage pour une position donnée des poussoirs des actionneurs.

Le document US 2001 0030462 divulgue un dispositif et un procédé de commande dans lesquels la commande de l'actionneur est déterminée à l'aide d'une table de conversion force-position.

OBJET DE L'INVENTION

L'invention a pour objet une commande de frein en position permettant d'atténuer les éventuels effets d'une dilatation.

BREVE DESCRIPTION DE L'INVENTION

En vue de la réalisation de l'invention, on propose un procédé de commande selon la revendication 1. Ainsi, si le courant qui circule dans le moteur est inférieur au courant de référence, c'est que, bien que le poussoir ait été amené dans une position correspondant à la consigne nominale de position, le poussoir exerce un effort moindre que celui qu'il est censé appliquer. Ce peut-être le cas si des dilatations ont allongé le tube de torsion de sorte que le modèle utilisé pour déduire la consigne nominale de position de la consigne d'effort n'est plus représentatif. Dans ce cas, on détermine une correction de position que l'on ajoute à la consigne nominale de position nominale dans le but d'augmenter l'effort effectivement appliqué par le poussoir sur les éléments de friction.

BREVE DESCRIPTION DES DESSINS

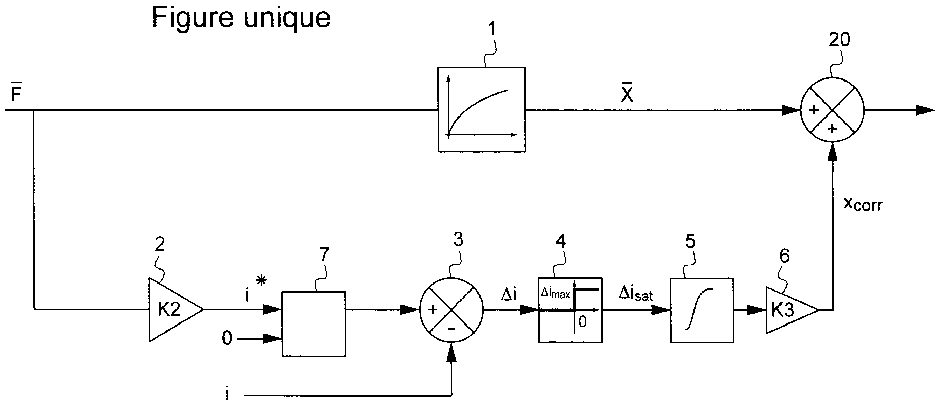

L'invention sera mieux comprise à la lumière de la description qui suit en référence à l'unique figure présente un schéma-bloc d'un mode particulier de mise en oeuvre du procédé de l'invention.

DESCRIPTION DETAILLEE DE L'INVENTION

L'invention est ici décrite en application à un frein d'aéronef de type comportant des actionneurs électromécaniques commandés en déplacement. Un calculateur (non représenté) génère une consigne de freinage $\overline{F}$. Cette consigne est corrigée à haute fréquence par un système de protection anti-blocage qui, vérifiant en permanence le taux de glissement de la roue, détecte un éventuel départ au blocage de la roue et diminue en conséquence la consigne de freinage $\overline{F}$ pour éviter le blocage de la roue.

De façon connue en soi, un convertisseur 1 transforme la consigne de freinage $\overline{F}$ en une consigne nominale de position $\overline{X}$ pour le poussoir de l'actionneur, ici selon un modèle non-linéaire. Le calcul de la consigne nominale de position $\overline{X}$ est ici réalisé à une fréquence de calcul élevée compatible avec la vitesse de fonctionnement de la protection d'anti-blocage, de sorte que la consigne nominale de position $\overline{X}$ tient compte à la fois des composantes basse fréquence et des composantes haute fréquence de la consigne de freinage $\overline{F}$.

Selon l'invention, on calcule une correction de position $x_{corr}$, que l'on ajoute au moyen du sommateur 20 à la consigne nominale de position $\overline{X}$ pour obtenir la consigne nominale de position corrigée $\overline{X}_{corr} = \overline{X} + x_{corr}$. Cette correction de position $x_{corr}$ est réalisée à basse fréquence et tient compte d'une différence entre un courant circulant dans le moteur de l'actionneur et un courant de référence estimé selon les modalités suivantes.

On commence par estimer un courant de référence i* qui est le courant qui circulerait dans le moteur électrique de l'actionneur pour que le poussoir applique un effort égal à la consigne d'effort $\overline{F}$, dans une situation de référence donnée.

Plus précisément, on sait que l'effort exercé par le poussoir sur les éléments de friction est donné par l'équation gouvernant la dynamique de rotation du moteur :

$$F = r.\eta \left\{ K \cdot i - C_s - C_v \cdot \Omega - J\frac{d\Omega}{dt} \right\}$$

Où $\Omega$ est la vitesse de rotation du moteur, $J$ l'inertie de l'actionneur rapportée sur l'arbre du moteur, $K$ un coefficient de proportionnalité, i le courant circulant dans le moteur, $Cs$ le couple de frottement solide, $Cv$ le coefficient de couple de frottement visqueux, F l'effort exercé par le poussoir sur les éléments de friction, $r$ un rapport de transformation du mouvement de rotation du moteur en mouvement de translation du poussoir, et $\eta$ un rendement de la liaison entre le moteur et le poussoir.

Dans une situation de référence dans laquelle l'actionneur est en régime stationnaire (soit à l'arrêt, soit à vitesse constante faible), le terme d'accélération est petit, tandis que les termes de frottement solide et de frottement visqueux sont négligeables par rapport aux efforts en jeu. Par ailleurs, le rendement $\eta$ est stationnaire. On peut donc, sans beaucoup d'erreur, estimer que lorsque l'actionneur se trouve dans la situation de référence, l'effort exercé par le poussoir est lié au courant circulant dans le moteur de l'actionneur par la relation :

$$F \approx r \cdot \eta \cdot K \cdot i$$

Ainsi, si l'actionneur se trouve dans une telle situation de référence, l'exercice d'un effort égal à la consigne d'effort $\overline{F}$ nécessiterait qu'un courant de référence i* égal à :

$$i^* = \frac{\overline{F}}{r \cdot \eta \cdot K}$$

circule dans le moteur de l'actionneur.

Cette situation de référence est en pratique rencontrée fréquemment lors du fonctionnement du frein. Elle correspond notamment à l'application d'un effort par le poussoir sur les disques, hors correction brusque due à la protection antiblocage.

Sur le schéma de la figure, le courant de référence i* est calculé au moyen d'un multiplicateur 2 gain K2, égal à

$$K2 = \frac{1}{r \cdot \eta \cdot K}$$

Le courant de référence i* est fourni à l'entrée positive d'un comparateur 3 dont l'entrée négative reçoit une mesure du courant $i$ circulant réellement dans le moteur électrique de l'actionneur.

La sortie $\Delta i$ du comparateur 3 est fournie à un saturateur 4 qui sature cette sortie entre 0 et une valeur de saturation maximale $\Delta i_{max}$, pour fournir en sortie une différence calibrée $\Delta i_{sat}$. La sortie est alors fournie à un intégrateur 5 et enfin à un multiplicateur 6 de gain K3 qui transforme la sortie de l'intégrateur 5 en la correction de position $x_{corr}$, qui est ajoutée à la consigne nominale de position $\overline{X}$.

Du fait de l'action du saturateur 4, la correction de position $x_{corr}$ n'augmente que si le courant $i$ qui circule dans l'actionneur est inférieur au courant de référence i*, c'est-à-dire si l'effort appliqué est manifestement inférieur à ce qu'il devrait être.

En pratique, les conditions dans lesquelles une telle correction est susceptible d'intervenir sont des conditions de freinage engendrant un fort dégagement de chaleur conduisant à une dilatation du tube de torsion du frein, qui entraîne une diminution non souhaitée de l'effort appliqué. Il s'agit donc de freinage d'intensité très importante. Dans ces circonstances, et lorsque le poussoir est en contact avec les disques, il est légitime de considérer qu'il se trouve dans la situation de référence dans laquelle on peut facilement estimer le courant de référence i* qui devrait circuler dans le moteur électrique si l'actionneur appliquait l'effort demandé. Si le courant mesuré $i$ est inférieur au courant de référence i*, c'est que le modèle non-linéaire utilisé dans le convertisseur 1 pour calculer la consigne nominale de position $\overline{X}$ à partir de la consigne d'effort $\overline{F}$ n'est plus représentatif de l'état du frein, ce qui peut se produire en cas de fort dégagement de chaleur, engendrant des dilatations difficilement mesurables ou modélisables. La correction effectuée selon l'invention compense ainsi l'inadaptation du modèle non-linéaire aux conditions de freinage.

Selon un aspect particulier de l'invention, un organe de neutralisation 7 vérifie en permanence si les conditions de fonctionnement de l'actionneur sont bien compatibles avec le situation de référence pour laquelle le calcul du courant de référence est représentatif d'un courant réel pouvant circuler dans l'actionneur. Si les conditions de fonctionnement de l'actionneur sont telles que ce calcul ne serait pas représentatif (par exemple lors d'une phase d'accélération brusque du poussoir due à une correction du dispositif de protection antiglissement), l'organe de neutralisation 7 envoie une sortie nulle, de sorte que la différence $\Delta i$ est systématiquement négative. Le saturateur 4 renvoie donc une différence calibrée $\Delta i_{sat}$ nulle, et la sortie de l'intégrateur 5 reste ainsi figée à sa valeur courante. Ainsi, la correction de position est désactivée pour des conditions de fonctionnement de l'actionneur pour lesquelles le courant estimé i* n'est pas représentatif d'un courant pouvant circuler dans le moteur électrique de l'actionneur. En pratique, l'organe de protection tient compte de paramètres de fonctionnement tels que la position et la vitesse du poussoir, le courant $i$ circulant dans le moteur, afin de déterminer si oui ou non l'actionneur est dans la situation de référence.

De préférence, on prévoira une remise à zéro de la correction de position, par exemple toutes les fois qu'un contact entre le poussoir et les disques est détecté suite à l'accostage des disques par le poussoir de l'actionneur.

L'invention n'est pas limitée à ce qui vient d'être décrit, mais bien au contraire englobe toute variante entrant dans le cadre défini par les revendications.

En particulier, bien que l'on ait indiqué que l'on déterminait le courant de référence directement à partir de la consigne d'effort de freinage au moyen d'un simple multiplicateur 2, on pourra déterminer ce courant de façon plus sophistiquée, par exemple en tenant compte d'une valeur du rendement $\eta$ de la liaison qui peut différer selon le signe de la vitesse de rotation du moteur, et, de façon encore plus sophistiquée, en utilisant un modèle étalonné du type :

$$i^* = \frac{1}{K}\left\{\frac{\overline{F}}{r.\eta} + C_s + C_v \cdot \Omega\right\}$$

si l'on a étalonné au préalable les valeurs $C_s$ et $C_v$. Dans ce cas, la situation de référence englobe quasiment toutes les situations pratiques de fonctionnement de l'actionneur, hormis les cas d'accélération très brusque dans lesquels le terme d'accélération ne pourrait plus être négligé.

## Revendications

1. Procédé de commande d'un frein électromécanique de roue de véhicule comportant un actionneur muni d'un poussoir actionné par un moteur électrique et adapté à exercer sélectivement un effort de freinage sur des éléments de friction en réponse à une consigne d'actionnement, dans lequel à partir d'une consigne de freinage ($\overline{F}$), on détermine une consigne nominale de position ($\overline{X}$) de l'actionneur du frein, le procédé étant **caractérisé en ce que** :

   - à partir de cette même consigne de freinage ($\overline{F}$), on estime un courant de référence (i*) qui devrait normalement circuler dans le moteur de l'actionneur pour appliquer un effort égal à la consigne de freinage ;
   - on compare le courant de référence (i*) à un courant (i) circulant dans le moteur de l'actionneur, et on en déduit une correction de position ($x_{corr}$), et on ajoute la correction de position à la consigne nominale de position ($\overline{X}$) ; et
   - on neutralise la correction si on détecte que l'actionneur est dans une situation qui rend le calcul du courant de référence (i*) non représentatif d'un courant réel qui circulerait dans le moteur de l'actionneur.

2. Procédé selon la revendication 1, dans lequel, la correction de position ne peut qu'augmenter, l'augmentation n'ayant lieu que si le courant (i) circulant dans le moteur de l'actionneur est inférieur au courant de référence (i*).

3. Procédé selon la revendication 2, dans lequel, on sature la différence entre le courant de référence (i*) et le courant (i) circulant dans le moteur de l'actionneur à une valeur maximale ($\Delta i_{max}$) si la différence dépasse cette valeur maximale.

4. Procédé selon la revendication 3, dans lequel la différence saturée ($\Delta i_{sat}$) est intégrée.

5. Procédé selon la revendication 1, dans lequel la neutralisation de la correction fige la valeur de la correction de position à sa valeur courante.

6. Dispositif pour la mise en oeuvre du procédé de l'une des revendications précédentes, comportant:

   - une entrée pour recevoir une consigne de freinage ($\overline{F}$);
   - une entrée pour recevoir une mesure du courant (i) circulant dans le moteur de l'actionneur;
   - des moyens de calcul pour, à partir de la consigne de freinage ($\overline{F}$), déterminer une consigne nominale de position ($\overline{X}$) du poussoir l'actionneur ;
   - des moyens de calcul pour, à partir de la consigne de freinage ($\overline{F}$) et du courant (i) circulant dans le moteur de l'actionneur, estimer un courant de référence (i*) qui devrait normalement circuler dans le moteur de l'actionneur pour appliquer une effort égal à la consigne de freinage, comparer le courant de référence à un courant circulant dans le moteur de l'actionneur et déterminer une correction de position ($x_{corr}$);
   - un organe de neutralisation (7) pour neutraliser la correction lorsque l'actionneur est dans une situation qui rend le calcul du courant de référence (i*) non représentatif d'un courant réel qui circulerait dans le moteur de l'actionneur ;
   - une sortie fournissant une somme de la consigne nominale d'actionnement et de la correction de position.

## Patentansprüche

1. Verfahren zur Steuerung einer elektromechanischen Bremse eines Fahrzeugrades, die einen Aktor umfasst, der mit einem Stößel versehen ist, der von einem Elektromotor betätigt wird und dazu geeignet ist, selektiv eine Bremskraft auf Reibelemente in Antwort auf einen Betätigungssollwert auszuüben, wobei man ausgehend von einem Bremssollwert ($\overline{F}$) einen nominalen Positionssollwert ($\overline{X}$) des Aktors der Bremse bestimmt, wobei das Verfahren **dadurch gekennzeichnet ist, dass**:

- man ausgehend von diesem selben Bremssollwert ($\overline{F}$) einen Referenzstrom (i*) schätzt, der normalerweise in dem Motor des Aktors fließen sollte, um eine Kraft gleich dem Bremssollwert aufzubringen;
- man den Referenzstrom (i*) mit einem Strom ($\underline{i}$) vergleicht, der in dem Motor des Aktors fließt, und man daraus eine Positionskorrektur ($x_{corr}$) herleitet, und man die Positionskorrektur zum nominalen Positionssollwert ($\overline{X}$) addiert; und
- man die Korrektur neutralisiert, wenn man feststellt, dass der Aktor in einer Situation ist, die die Berechnung des Referenzstroms (i*) nicht repräsentativ für einen tatsächlichen Strom macht, der in dem Motor des Aktors fließen würde.

**2.** Verfahren nach Anspruch 1, bei dem sich die Positionskorrektur nur erhöhen kann, wobei die Erhöhung nur stattfindet, wenn der Strom ($\underline{i}$), der in dem Motor des Aktors fließt, kleiner als der Referenzstrom (i*) ist.

**3.** Verfahren nach Anspruch 2, bei dem man die Differenz zwischen dem Referenzstrom (i*) und dem Strom ($\underline{i}$), der in dem Motor des Aktors fließt, auf einen Maximalwert ($\Delta i_{max}$) sättigt, wenn die Differenz diesen Maximalwert überschreitet.

**4.** Verfahren nach Anspruch 3, bei dem die gesättigte Differenz ($\Delta i_{sat}$) integriert wird.

**5.** Verfahren nach Anspruch 1, bei dem die Neutralisierung der Korrektur den Wert der Positionskorrektur auf ihren Stromwert einfriert.

**6.** Vorrichtung zur Durchführung des Verfahrens nach einem der vorhergehenden Ansprüche, umfassend:

- einen Eingang zum Empfangen eines Bremssollwertes ($\overline{F}$);
- einen Eingang zum Empfangen einer Messung des Stroms ($\underline{i}$), der in dem Motor des Aktors fließt;
- Rechenmittel, um anhand des Bremssollwerts ($\overline{F}$) einen nominalen Positionssollwert ($\overline{X}$) des Stößels des Aktors zu bestimmen;
- Rechenmittel, um anhand des Bremssollwerts ($\overline{F}$) und des Stroms ($\underline{i}$), der in dem Motor des Aktors fließt, einen Referenzstrom (i*) zu schätzen, der normalerweise in dem Motor des Aktors fließen sollte, um eine Kraft gleich dem Bremssollwert aufzubringen, den Referenzstrom mit einem Strom zu vergleichen, der in dem Motor des Aktors fließt, und eine Positionskorrektur ($x_{corr}$) zu bestimmen;

**gekennzeichnet durch**

- ein Neutralisierungselement (7) zum Neutralisieren der Korrektur, wenn der Aktor in einer Situation ist, die die Berechnung des Referenzstroms (i*) nicht repräsentativ für einen tatsächlichen Strom macht, der in dem Motor des Aktors fließen würde;
- einen Ausgang, der eine Summe des nominalen Betätigungssollwertes und der Positionskorrektur liefert.

## Claims

**1.** A method of controlling an electromechanical brake for a vehicle wheel, the brake including an actuator provided with a pusher that is actuated by an electric motor and that is adapted to exert a braking force selectively on friction elements in response to an actuation setpoint, wherein from a braking setpoint ($\overline{F}$), a nominal position setpoint ($\overline{X}$) for the brake actuators is determined, the method being **characterized in that**:

· from said braking setpoint ($\overline{F}$), estimating a reference current (i*) that ought normally to be flowing in the motor of the actuator to apply a force equal to the braking setpoint;
· comparing the reference current (i*) with a current ($\underline{i}$) actually flowing in the motor of the actuator, and deducing a position correction ($x_{corr}$), and adding the position correction to the nominal position setpoint ($\overline{X}$) ; and
· neutralizing the correction if it is detected that the actuator is in a situation that makes the calculation of the reference current (i*) not representative of a real current flowing in the motor of the actuator.

**2.** A method according to claim 1, wherein, since the position correction can only increase, the increase takes place only if the current ($\underline{i}$) flowing in the motor of the actuator is less than the reference current (i*).

**3.** A method according to claim 2, wherein the difference between the reference current (i*) and the current ($\underline{i}$) flowing in the motor of the actuator is saturated at a maximum value ($\Delta i_{max}$) if the difference exceeds said maximum value.

**4.** A method according to claim 3, wherein the saturated

difference ($\Delta i_{sat}$) is integrated.

5. A method according to claim 5, wherein neutralizing the correction blocks the value of the position correction at its then current value.

6. Apparatus for implementing the method of any preceding claim, the apparatus comprising:

· an input for receiving a braking setpoint ($\overline{F}$);
· an input for receiving a measurement of the current ($\underline{i}$) flowing in the motor of the actuator;
· calculation means for, in view of the braking setpoint ($\overline{F}$),calculate a nominal position setpoint ($\overline{X}$) for the pusher of the actuator;
· calculation means for, in view of the braking setpoint ($\overline{F}$) and the current ($\underline{i}$) flowing in the motor of the actuator, estimate a reference current ($i^*$) that ought normally to be flowing in the motor of the actuator to apply a force equal to the braking setpoint, compare the reference current with a current actually flowing in the motor of the actuator and determine a position correction ($x_{corr}$);
· a neutralization organ in order to neutralize the correction wherein the actuator is in a situation that makes the calculation of the reference current ($i^*$) not representative of a reference current flowing in the motor of the actuator;
· an output delivering the sum of the nominal actuation setpoint plus the position correction.

Figure unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1695887 A
- US 6662906 B

- US 20010030462 A